# EUROPEAN PATENT SPECIFICATION

(11) **EP 2 786 927 B1**
(45) Date of publication and mention of the grant of the patent: **14.09.2016**
(21) Application number: 12852720.7
(22) Date of filing: 27.11.2012
(51) Int. Cl.: B62K 19/20, B62K 25/20

(54) **VEHICLE FRAME STRUCTURE**
FAHRZEUGRAHMENAUFBAU
STRUCTURE DE CADRE DE VÉHICULE

(30) Priority: 02.12.2011 JP 2011265127
(43) Date of publication of application: 08.10.2014
(73) Proprietor: Honda Motor Co., Ltd., Minato-ku Tokyo 107-8556 (JP)
(72) Inventor: TAKENAKA, Masahiko, Wako-shi Saitama 351-0193 (JP)
(74) Representative: Quinterno, Giuseppe
(86) International application number: PCT/JP2012/080588
(87) International publication number: WO 2013/080959

(56) References cited:
- EP-A1- 1 818 249
- JP-A- 2001 334 960
- JP-A- 2006 056 323
- JP-B2- 3 466 383

## Description

### TECHNICAL FIELD

The present invention relates to an improvement in a vehicle frame structure and in particular to a frame structure of the kind defined in the preamble of claim 1.

### BACKGROUND ART

A frame structure of that kind is disclosed in JP-A-2006056323.

A cushion for absorbing loads acting on a rear wheel is generally provided to the rear part of motorcycles. Various types of frame structures for supporting this cushion have been proposed (see also Japanese patent No. 3466383).

In order to improve fuel economy, in recent years it has been desirable to reduce the thickness and weight of the vehicle frame structure.

A frame structure is accordingly needed in which the bracket can be made thinner.

### SUMMARY OF INVENTION

### TECHNICAL PROBLEM

It is an object of the present invention to provide a frame structure in which the frame can be lightened in a vehicle in which a rear frame includes a cushion bolt.

### SOLUTION TO PROBLEM

The above-stated object is achieved according to the present invention by a frame structure of a vehicle having the features defined in claim 1.

As stated in claim 2, a lightening hole is preferably formed in the upper extending part.

As stated in claim 3, the rear frame preferably comprises a flat surface extending up and down and front to back with respect to the vehicle, the frame through-hole being provided to the flat surface; and the bracket being welded to the flat surface.

As stated in claim 4, the bracket body part preferably comprises an outer contacting part for contacting a laterally outer flat surface of the rear frame, the outer contacting part being welded to the outer flat surface; an outer convexity protruding outward from the outer contacting part and having the bracket through-hole on an outer side; an inner contacting part for contacting a laterally inner flat surface of the rear frame, the inner contacting part being welded to the inner flat surface; and an inner convex part protruding inward from the inner contacting part and having the bracket through-hole on an inner side, the cushion bolt being supported by the outer convex part and the inner convex part.

### ADVANTAGEOUS EFFECTS OF INVENTION

In the invention according to claim 1, the frame through-holes are provided to the rear frames; the brackets, which have the bracket through-holes, are welded to the rear frames so that the axes of the bracket through-holes and the axes of the frame through-holes are aligned; the cushion bolt is passed through the frame through-holes and the bracket through-holes; and the cushion bolt is welded to the bracket without being welded to the rear frame.

Since the cushion bolt is welded to the bracket without being welded to the rear frame, loads acting on the cushion bolt are added first onto the bracket, and thereafter onto the rear frame via the bracket. Specifically, loads acting on the cushion bolt can be dispersed to the bracket and the rear frame, and therefore concentrated loads are changed into dispersed loads.

Since loads are not concentrated at the bracket, and the bracket need not be reinforced or given enhanced rigidity, the bracket can be made thinner and lighter.

Compared to welding the cushion bolt to the rear frame, according to the present invention loads can be dispersed by the bracket to the rear frame. Stress on the rear frame is reduced, and the rear frame can be made thinner and lighter. The frame can therefore be lightened in vehicles in which the rear frame includes a cushion bolt.

Furthermore, the bracket is composed of the bracket-body part and the upper extending part, which extends upward from the bracket-body part and receives the vehicle-mounted component.

Besides dispersing loads, the bracket doubles as a supporting member for the vehicle-mounted component. In contrast to welding the cushion bolt to the rear frame and providing a bracket for the vehicle-mounted component to the rear frame at a position distanced from the cushion bolt, the bracket can be used for two purposes according to the present invention. The number of components can be decreased, and costs can be limited.

In the invention according to claim 2, lightening holes are formed in the upper extending part.

Forming the lightening holes in the upper extending part allows the weight of the frame to be reduced.

In the invention according to claim 3, the flat surface, which extends up and down as well as front and back, is formed on the rear frame, the frame through-hole is provided to the flat surface, and the bracket is welded to the flat surface.

Since the bracket is welded to the flat surface of the rear frame, the work of welding is facilitated, and the quality of welding can be enhanced.

In the invention according to claim 4, the outer convex part protrudes to the outside from the outer contacting part, which contacts the flat surface on the outside of the rear frame, the inner convex part protrudes to the inside from the inner contacting part, which contacts the inner flat surface, and the cushion bolt is supported by the outer convex part and the inner convex part.

Since the cushion bolt is supported by the outer convex part and the inner convex part, a supported interval of the cushion bolt can be increased, and loads applied to the cushion bolt can be borne firmly as compared to supporting the cushion bolt at the positions of the outer contacting part and the inner contacting part.

Since the outer convex part protrudes to the outside, and the inner convex part protrudes to the inside, the supported interval of the cushion bolt alone can be increased without changing a width of the rear frame, and increases in the weight of the rear frame can be limited.

The rigidity of the bracket is increased by the outer convex part and the inner convex part, and therefore loads applied by the vehicle-mounted component can be supported by the upper wall of the bracket even when the loads are large. In principle, rigidity is reduced when the bracket is formed in a flat shape, but since the bracket in the present invention has the outer convex part and the inner convex part, rigidity increases, and the bracket can be made even thinner.

### BRIEF DESCRIPTION OF DRAWINGS

- FIG. 1: is a left lateral view of a vehicle according to the present invention;
- FIG. 2: is a perspective view of a vehicle frame;
- FIG. 3: is an exploded perspective view exploded from a rear frame to a bracket;
- FIG. 4: is a view of a trial fitting of the bracket;
- FIG. 5: is a lateral view depicting a welded part between the rear frame and the bracket and a welded part between the bracket and a cushion bolt; and FIG. 6 is a cross-sectional view along the 6-6 line in FIG. 5.

### DESCRIPTION OF EMBODIMENTS

Embodiments of the present invention are described below with reference to the accompanying drawings. The terms "front," "rear," "left," "right," "up," and "down" in the descriptions below represent directions with respect to a rider sitting in the rider's seat.

### EMBODIMENTS

A scooter-type vehicle according to the present invention will be described with reference to the drawings.

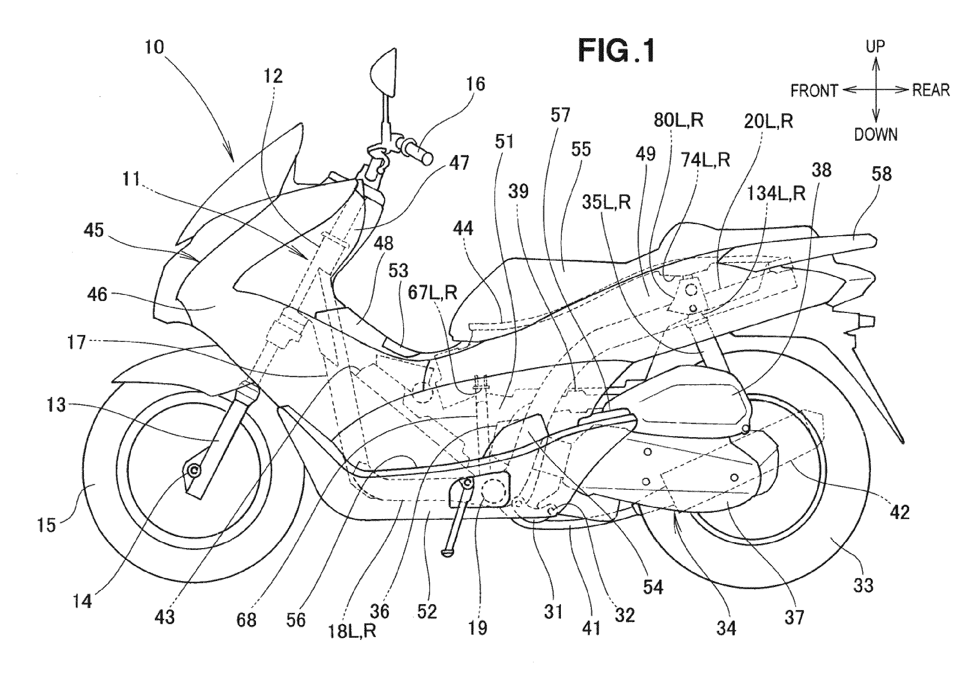

As shown in FIG. 1, a scooter-type vehicle 10 has a front fork 13 that is steerably supported by a header pipe 12 of a vehicle frame 11 (described in detail hereinafter); a front wheel 15 attached to a front axle 14 rotatably provided to the lower end of the front fork 13; handles 16 connected to the upper end of the front fork 13 for the driver to grip and steer the front wheel 15; a lower frame 18L ("L" is a suffix indicating left; cases below are identical) extending toward the rear, the front end of which is joined to the lower end of a main pipe 17 that extends downward from the header pipe 12 toward the rear of the vehicle; a rear frame 20L (described in detail hereinafter) extending upward and toward the rear, the front end of which is joined to a cross pipe 19 (described in detail hereinafter) that is joined to the rear end of the lower frame 18L; a power unit 34 that doubles as a swing arm that is held in place by an engine hanger link 31 so as to be able to pivot via a pivot axle 32, where the engine hanger link 31 is connected to a lower part of the front end of the rear frame 20L, and the power unit is also provided with a rear wheel 33 on the rear end; and a rear cushion 35L, the lower end of which is attached to the rear end of the power unit 34, the upper end of which is supported by the rear part of the rear frame 20L, and which absorbs loads acting on the rear wheel 33.

The power unit 34 is composed of an engine 36 that is pivotably connected to the engine hanger link 31, and a transmission 37, which is formed integrally with the engine 36, transmits the power of the engine 36 to the rear wheel 33, and includes a gear-shifting mechanism.

An intake system, which has an air cleaner 38 and a carburetor 39, and an exhaust system, which has an exhaust pipe 41 and a muffler 42, are connected to the cylinder head of the engine 36.

A fuel tank 43 is positioned to the rear of the main pipe 17, and a stowing box 44 for stowing helmets and other items is positioned behind and above the fuel tank 43. The stowing box 44 is supported by the rear end of the lower frame 18L and the rear part of the rear frame 20L.

The vehicle frame 11 is covered by a vehicle cover 45. The vehicle cover 45 is composed of a front cover 46 for covering the front area of the vehicle frame 11; an upper inner cover 47 for covering the rear area of the front cover 46; a lower inner cover 48, which is provided adjoining the upper inner cover 47, for covering the upper area of the fuel tank 43; a rear cover 49, which is provided adjoining the rear end of the lower inner cover 48, for covering the lateral area of the rear part of the rear frame 20L; a middle cover 51, which is provided adjoining the lower area of the front cover 46 and the rear cover 49, for covering the lateral area of the fuel tank 43 and the engine 36; and a lower cover 52, which is provided adjoining the front cover 46 and the middle cover 51, for covering the lower and lateral areas of the lower part of the vehicle frame 11.

An oil-supply lid 53 is provided to the upper part of the lower inner cover 48 so as to be able to open and close, as well as allow attachment and detachment of the oil-supply cap of the fuel tank 43. A maintenance lid 54, which is used during maintenance, is also provided to the leftward part of the middle cover 51 so as to be able to open and close.

A seat 55, on which the driver and an accompanying passenger sit, is positioned so as to cover the stowing box 44. A step 56, where the feet of the rider are placed, is positioned below the seat 55 in the heightwise direction and between the handles 16 and the seat 55.

A pillion step 57, on which the feet of the accompanying passenger are placed, is attached behind the step 56, and a grab rail 58, which is grasped by the accompanying passenger, is provided so as to encircle the rear part of the seat 55.

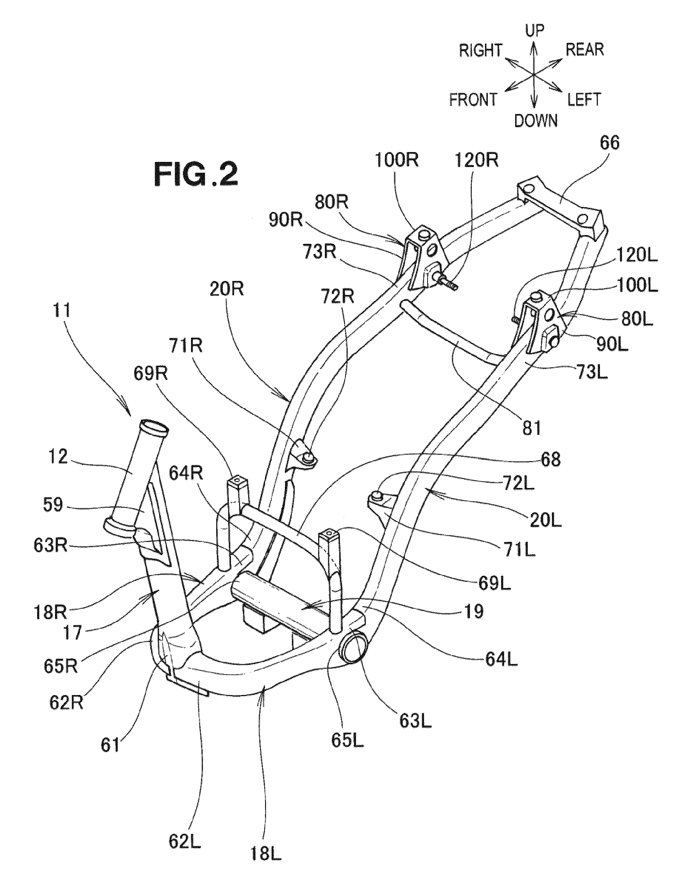

The structure of the vehicle frame 11 will be described in detail with reference to FIG. 2.

As shown in FIG. 2, the vehicle frame 11 is composed of the header pipe 12; the hollow main pipe 17, the upper-end part of which is reinforced by a reinforcing member 59 and which extends from the header pipe 12 downward toward the rear of the vehicle; a pair of left and right lower frames 18L, R ("R" is a suffix indicating right; cases below are identical) that both extend to the rear from lower parts 61 of the main pipe 17, where front-end parts 62L, R of the lower frames are both joined to the lower parts 61; the cross pipe 19, which extends in a lateral direction and is joined to a rear-end part 63L of the lower frame 18L and a rear-end part 63R of the lower frame 18R; a pair of left and right rear frames 20L, R that extend upward and to the rear and are joined to the respective rear-end parts 63L, R of the lower frames 18L, R and to end parts 65L, R of the cross pipe 19; and a rear cross member 66 that extends in a lateral direction and is joined to the rear end of the rear frame 20L and the rear end of the rear frame 20R.

Besides the cross pipe 19, a U-shaped stowing-box-supporting member 68 for supporting the front parts (FIG. 1, signs 67L, R) of the stowing box (FIG. 1, sign 44) is also joined to the rear-end part 63L of the lower frame 18L and the rear-end part 63R of the lower frame 18R. Fastening seats 69L, R for fastening the stowing box are provided to the upper left and right ends of the stowing-box-supporting member 68.

Stowing-box-intermediate stays 71L, R for supporting the intermediate area in the front-to-rear direction of the stowing box are further provided to respective front-part inner lateral surfaces of the rear frames 20L, R. Cushion rubber parts 72L, R are provided to respective upper surfaces of the stowing-box-intermediate stays 71L, R.

A bracket 80L (described in detail hereinafter) for supporting the rear part (FIG. 1, sign 74L) of the stowing box and supporting the rear cushion (FIG. 1, sign 35L) is joined to the rear part 73L of the rear frame 20L. A bracket 80R for supporting the rear part (FIG. 1, sign 74R) of the stowing box and supporting the rear cushion (FIG. 1, sign 35R) is joined to the rear part 73R of the rear frame 20R. In other words, the stowing box is supported by the stowing-box-supporting member 68, the stowing-part-intermediate stays 71L, R, and the brackets 80L, R.

An intermediate cross member 81 that extends in the lateral direction is joined to an intermediate part in the front-to-back direction of the rear frame 20L and an intermediate part in the front-to-back direction of the rear frame 20R.

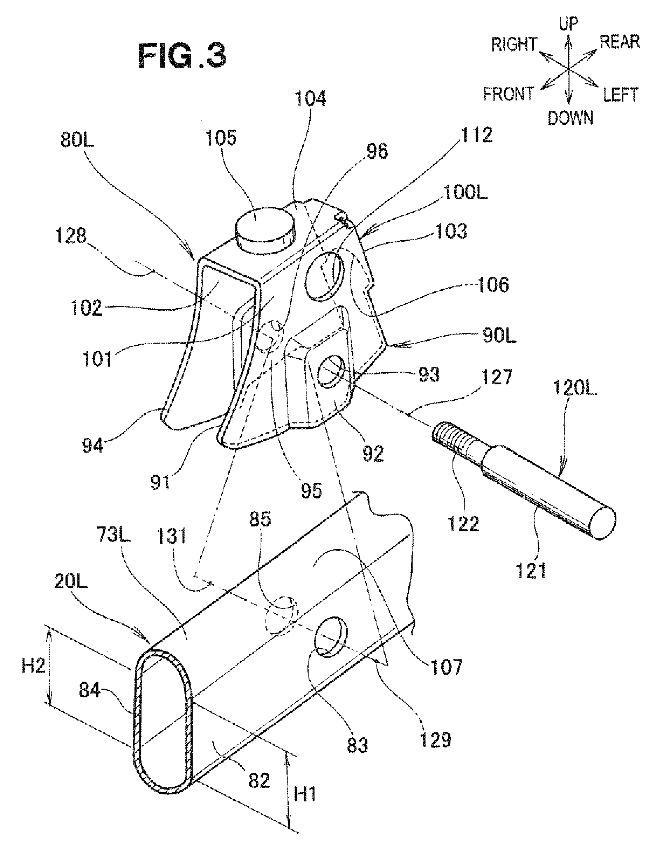

The respective structures of the rear part 73L of the rear frame 20L, the bracket 80L, and a cushion bolt, as well as the assembled structure of the bracket 80L will be described with reference to FIG. 3.

As shown in FIG. 3, the rear frame 20L is a hollow member. An outer flat surface 82 extending up and down as well as front and back and having a fixed height H1 is formed on the lateral outside of the rear part 73L of the rear frame 20L. A frame-side through-hole 83 that passes through in the lateral direction is provided to the outer flat surface 82.

An inner flat surface 84 extending up and down as well as front and back and having a fixed height H2 is formed on the inside in the lateral direction of the rear part 73L of the rear frame 20L. A frame-side through-hole 85 that passes through in the lateral direction is provided to the inner flat surface 84.

The structure of the bracket 80L will be described next.

The bracket 80L is composed of a bracket-body part 90L, which contacts the rear frame 20L, and an upper extending part 100L, which extends upward from the bracket-body part 90L and receives the stowing box (FIG. 1, sign 44).

The bracket-body part 90L is composed of an outer contacting part 91 that is provided to an outer lower part in the lateral direction of the upper extending part 100L and contacts the outer flat surface 82; an outer convex part 92 that protrudes outward from the outer contacting part 91 and includes a bracket through-hole 93; an inner contacting part 94 that is provided to an inner lower part in the lateral direction of the upper extending part 100L and contacts the inner flat surface 84; and an inner convex part 95 that protrudes inward from the inner contacting part 94 and includes a bracket through-hole 96.

The upper extending part 100L is composed of an outer wall 101, which is provided continuously with the outer contacting part 91 and extends up and down; an inner wall 102, which is provided continuously with the inner contacting part 94 and extends up and down; a rear wall 103, which is provided continuously with the rear end of the outer wall 101 and the rear end of the inner wall 102 and extends up and down; and an upper wall 104, which is provided continuously with the outer wall 101, the inner wall 102, and the rear wall 103 and extends to the front and rear. A cushion rubber part 105 for receiving the rear part (FIG. 1, sign 74R) of the stowing box (FIG. 1, sign 44) is provided to the upper wall 104.

A concave part 106 formed from cutting out a rear-end part of the bracket-body part 90L is provided to a rear-end part of the bracket 80L. Providing the concave part 106 to the bracket 80L allows the bracket 80L to be prevented from interfering with an upper surface 107 of the rear frame 20L when the bracket 80L is trial-fitted to the rear frame 20L.

A cushion bolt 120L will be described next.

The cushion bolt 120L is composed of a shaft part 121 and a screw part 122. The shaft part 121 is inserted into a bracket-side outer through-hole 93 extending in the lateral direction in the bracket-body part 90L, a frame-side outer through-hole 83 in the rear frame 20L, a frame-side inner through-hole 85, and a bracket-side inner through-hole 96. The screw part 122 is extended from the shaft part 121 toward the inside in the lateral direction and supports the rear cushion (FIG. 1, sign 35L).

To perform a trial fitting of the bracket 80L to the rear part 73L of the rear frame 20L, the bracket 80L is fit to the rear part 73L, and the cushion bolt 120L is passed through the frame through-holes 83, 85 and the bracket through-holes 93, 96.

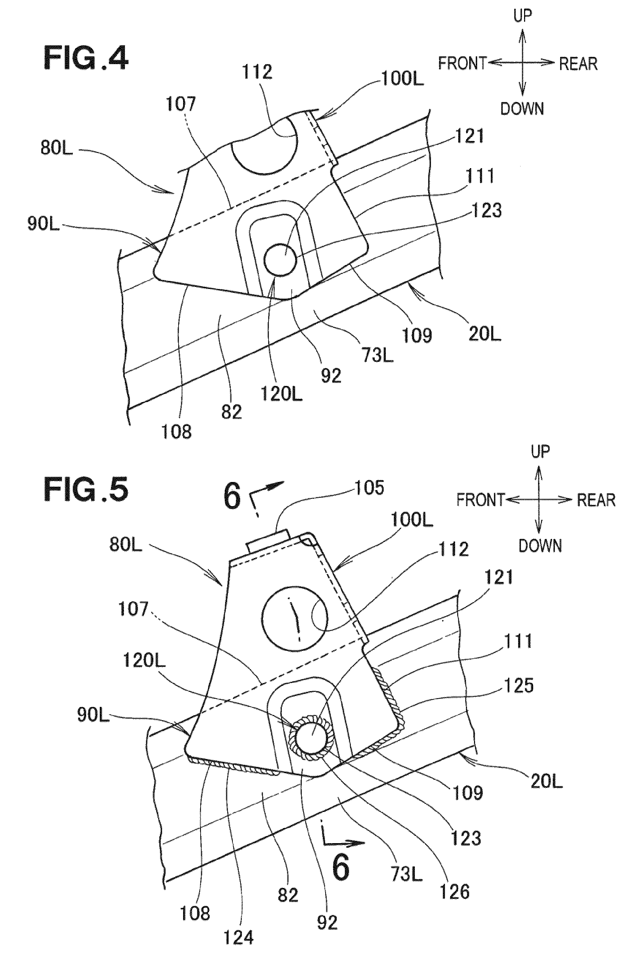

Trial fitting of the bracket 80L to the rear part 73L of the rear frame 20L will be described with reference to FIG. 4.

As shown in FIG. 4, the bracket 80L is trial-fit to the rear part 73L of the rear frame 20L. After trial-fitting the bracket 80L, fillet welding is performed between the outer flat surface 82 and a front lower end 108, a rear lower end 109, and a rear end 111, and between the outer convex part 92 and an outer circumferential surface 123 of the shaft part 121.

The welded parts between the rear frame 20L and the bracket 80L and the welded parts between the bracket 80L and the cushion bolt 120L will be described with reference to FIG. 5.

As shown in FIG. 5, fillet welding is performed between the outer flat surface 82 and the front lower end 108, and an outer front welded part 124 is formed. Fillet welding is also performed between the outer flat surface 82 and the rear lower end 109, as well as the rear end 111, and an outer rear welded part 125 is formed. In other words, the outer flat surface 82 is welded to the bracket 80L.

Fillet welding is further performed between the outer convex part 92 and the outer circumferential surface 123 of the shaft part 121, and an outer circumferential welded part 126 is formed.

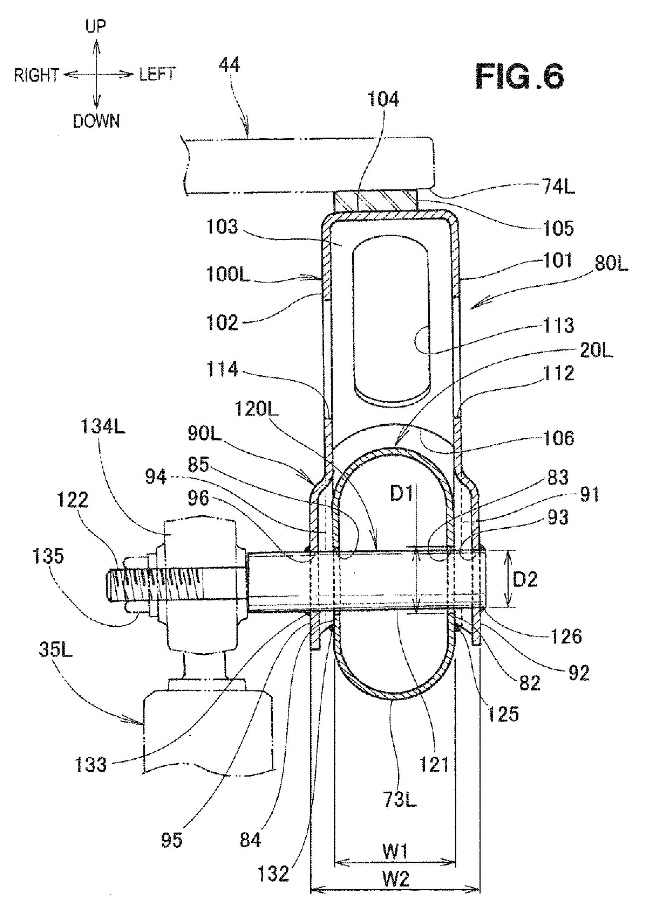

The bracket 80L when welded to the rear frame 20L will be described with reference to FIG. 6.

As shown in FIG. 6, the bracket 80L has the bracket-side outer through-hole 93 and the bracket-side inner through-hole 96 and is welded to the rear frame 20L so that the axes of the bracket through-holes 93, 96 (FIG. 3, signs 127, 128) and the axes of the frame-side outer through-hole 83 and the frame-side inner through-hole 85 (FIG. 3, signs 129, 131) are aligned. Noteworthy instances of these welded parts include the outer rear welded part 125, which results from welding the outer contacting part 91 to the outer flat surface 82, and an inner rear welded part 132, which results from welding the inner contacting part 94 to the inner flat surface 84.

The cushion bolt 120L is welded to the bracket 80L without being welded to the rear frame 20L. Noteworthy instances of these welded parts include the outer circumferential welded part 126 and an inner circumferential welded part 133. The cushion bolt 120L is supported by the outer convex part 92 and the inner convex part 95. Using a nut 135 to fasten an upper end 134 of the rear cushion 35L to the screw part 122 of the cushion bolt 120L causes the rear cushion to be supported by the rear frame 20L.

The lightening holes provided to the upper extending part 100L of the bracket 80L will be described next.

An outer lightening hole 112 is formed in the outer wall 101 of the upper extending part 100L. A rear lightening hole 113 is also formed in the rear wall 103. An inner lightening hole 114 is further formed in the inner wall 102.

The operational effects of the vehicle 10 above will be described below.

According to the configuration of FIG. 6, the frame through-holes 83, 85 are provided to the rear frame 20L; the bracket 80L, which has the bracket through-holes 93, 96, is welded to the rear frame 20L so that the axes of the bracket through-holes 93, 96 and the axes of the frame through-holes 83, 85 are aligned; the cushion bolt 120L is passed through the frame through-holes 83, 85 and the bracket through-holes 93, 96; and the cushion bolt 120L is welded to the bracket 80L without being welded to the rear frame 20L.

Since the cushion bolt 120L is welded to the bracket 80L without being welded to the rear frame 20L, loads acting on the cushion bolt 120L are added first onto the bracket 80L, and thereafter onto the rear frame 20L via the bracket 80L. Specifically, loads acting on the cushion bolt 120L can be dispersed to the bracket 80L and the rear frame 20L, and therefore concentrated loads are changed into dispersed loads.

Since loads are not concentrated at the bracket 80L, and the bracket 80L need not be reinforced or given enhanced rigidity, the bracket 80L can be made thinner and lighter.

Compared to welding the cushion bolt 120L to the rear frame 20L, loads according to the present invention can be dispersed by the bracket 80L to the rear frame 20L. Stress on the rear frame 20L is reduced, and the rear frame 20L can be made thinner and lighter. The thickness of the rear frame 20L is usually 2.0 to 3.0 mm, but reducing the stress generated in the rear frame 20L allows the thickness to be 1.0 to 2.0 mm. The frame can therefore be lightened in vehicles in which the rear frame includes a cushion bolt.

A diameter D1 of the frame through-holes 83, 85 in FIG. 6 is set to be larger than an outer diameter D2 of the cushion bolt 120L. Specifically, the diameter D1 of the frame through-holes 83, 85 can be made larger without affecting the cushion bolt 120L. If the diameter of the frame through-holes 83, 85 is large enough, the cushion bolt 120L can be held in a predetermined position even when the positions of the frame through-holes 83, 85 are displaced during the course of manufacture.

According to the configuration of FIG. 6, the bracket 80L is composed of the bracket-body part 90L and the upper extending part 100L, which extends upward from the bracket-body part 90L and receives the vehicle-mounted component (e.g., the stowing box) 44.

Besides dispersing loads, the bracket 80L doubles as a supporting member for the vehicle-mounted component 44. In comparison to welding the cushion bolt 120L to the rear frame 20L and providing a bracket for the vehicle-mounted component to the rear frame 20L at a position removed from the cushion bolt 120L, the bracket 80L can be used for two purposes according to the present invention. The number of components can be decreased, and costs can be limited. The stowing box 44 was applied as the vehicle-mounted component in the embodiments, but in vehicles that do not include a stowing box, a seat may be applied, and the upper extending part 100L may be used to receive the seat.

According the configuration of FIG. 6, the lightening holes 112, 113, 114 are formed in the upper extending part 100L.

Forming the lightening holes 112, 113, 114 in the upper extending part 100L allows the weight of the frame to be lightened.

According to the configuration of FIG. 3, the flat surfaces 82, 84, which extend up and down as well as front and back, are formed on the rear frame 20L, the frame through-holes 83, 85 are provided to the flat surfaces 82, 84, and the bracket 80L is welded to the flat surfaces 82, 84.

As shown in FIG. 5, since the bracket 80L is welded to the flat surface 82 of the rear frame 20L, the work of welding is facilitated, and the quality of welding can be enhanced.

According to the configuration of FIG. 6, the outer convex part 92 protrudes to the outside from the outer contacting part 91, which contacts the flat surface 82 on the outside of the rear frame 20L, the inner convex part 95 protrudes to the inside from the inner contacting part 94, which contacts the inner flat surface 84, and the cushion bolt 120L is supported by the outer convex part 92 and the inner convex part 95.

Since the cushion bolt 120L is supported by the outer convex part 92 and the inner convex part 95, a supported interval W2 of the cushion bolt can be increased, and loads applied to the cushion bolt can be borne firmly as compared to supporting the cushion bolt 120L at the positions of the outer contacting part 91 and the inner contacting part 94.

Since the outer convex part 92 protrudes to the outside, and the inner convex part 95 protrudes to the inside, the supported interval W2 of the cushion bolt alone can be increased without changing a width W1 of the rear frame, and increases in the weight of the rear frame can be limited.

The rigidity of the bracket 80L is increased by the outer convex part 92 and the inner convex part 95, and therefore loads applied by the vehicle-mounted component 44 can be supported by the upper wall 104 of the bracket 80L even when the loads are large. In principle, rigidity is reduced when the bracket is formed in a flat shape, but since the bracket 80L in the present invention has the outer convex part 92 and the inner convex part 95, rigidity increases, and the bracket can be made even thinner.

The rear frame 20L in FIG. 6 is formed in an oval shape when viewed in cross section but may also be formed in a rectangular or square shape. If the shape is rectangular or square, the flat surface can be maintained, and the welding quality can be enhanced.

The structure of the frame according to the present invention was applied to a scooter-type vehicle in the embodiments but can be applied to any vehicle in which a cushion is attached to a rear frame, and besides scooter-type vehicles could be applied to motorcycles or three-wheeled vehicles.

### INDUSTRIAL APPLICABILITY

The frame structure of the present invention is ideal for vehicles in which a cushion is attached to a rear frame.

### REFERENCE SIGNS LIST

- 10:: Vehicle (scooter-type vehicle)
- 20L, 20R:: Rear frames
- 35L, 35R:: Cushions (rear cushions)
- 44:: Vehicle-mounted component (stowing box)
- 80L, 80R:: Brackets
- 82, 84:: Flat surfaces
- 83, 85:: Frame through-holes
- 90L, 90R:: Bracket bodies
- 91:: Outer contacting part
- 92:: Outer convex part
- 93, 96:: Bracket through-holes
- 94:: Inner contacting part
- 95:: Inner convex part
- 100L, 100R:: Upper extending parts
- 112, 113, 114:: Lightening holes
- 120L, 120R:: Cushion bolts
- 127, 128, 129, 131:: Axes
- 134L, 134R:: Upper ends

## Claims

1. A frame structure of a vehicle, comprising:
a pair of left and right rear frames (20L, 20R);
a cushion (35L, 35R) attached to each of the rear frames (20L, 20R);
a bracket (80L, 80R) provided to each of the rear frames (20L, 20R);
both of the rear frames (20L, 20R) having a frame through-hole (83, 85) passing in a lateral direction;
both of the brackets (80L, 80R) having a bracket through-hole (93, 96) passing in the lateral direction and being welded to the respective rear frames (20L, 20R) so that axes of the bracket through-holes (93, 96) and axes of the frame through-holes (83, 85) are aligned; and
a cushion bolt (120L, 120R) for fastening an upper end (134L, 134R) of the cushion (35L, 35R) to the rear frame (20L, 20R) being inserted into the frame through-hole (83, 85) and the bracket through-hole (93, 96),
**characterized in that** the cushion bolt (120L, 120R) is welded to the bracket (80L, 80R) without being welded to the rear frame (20L. 20R); and
the bracket (80L, 80R) has a bracket body part (90L, 90R) and an upper extending part (100L, 100R), the bracket body part (90L, 90R) being in contact with the rear frame (20L, 20R), and the upper extending part (100L, 100R) receiving a vehicle-mounted component (44) and extending upward from the bracket body part (90L, 90R).

2. The frame structure of a vehicle according to claim 1, further comprising a lightening hole (112 - 114) formed in the upper extending part (100L, 100R).

3. The frame structure of a vehicle according to claim 1 or 2, wherein the rear frame (20L, 20R) comprises a flat surface (82, 84) extending up and down and front to back with respect to the vehicle, the frame through-hole (83, 85) being provided to the flat surface (82, 84); and the bracket (80L, 80R) being welded to the flat surface (82, 84).

4. The frame structure of a vehicle according to claim 3, wherein the bracket body part (90L, 90R) comprises:
an outer contacting part (91) for contacting a laterally outer flat surface (82) of the rear frame (20L, 20R), the outer contacting part (91) being welded to the outer flat surface (82);
an outer convexity (92) protruding outward from the outer contacting part (91) and having the bracket through-hole (93, 96) on an outer side;
an inner contacting part (94) for contacting a laterally inner flat surface (84) of the rear frame (20L, 20R), the inner contacting part (94) being welded to the inner flat surface (84); and
an inner convex part (95) protruding inward from the inner contacting part (94) and having the bracket through-hole (93, 96) on an inner side,
the cushion bolt (120L, 120R) being supported by the outer convex part (92) and the inner convex part (95).

## Patentansprüche

1. Rahmenstruktur eines Fahrzeugs, umfassend:
ein Paar aus einem linken und einem rechten hinteren Rahmen (20L, 20R),
einen Dämpfer (35L, 35R), der an jedem der hinteren Rahmen (20L, 20R) angebracht ist,
eine Halterung (80L, 80R), die an jedem der hinteren Rahmen (20L, 20R) bereitgestellt ist,
wobei beide hinteren Rahmen (20L, 20R) ein Rahmendurchgangsloch (83, 85) aufweisen, das in einer lateralen Richtung hindurchtritt,
wobei beide Halterungen (80L, 80R) ein Halterungsdurchgangsloch (93, 96) aufweisen, das in der lateralen Richtung hindurchtritt, und so an die jeweiligen hinteren Rahmen (20L, 20R) geschweißt sind, dass Achsen der Halterungsdurchgangslöcher (93, 96) und Achsen der Rahmendurchgangslöcher (83, 85) ausgerichtet sind, und
einen Dämpferbolzen (120L, 120R) zum Befestigen eines oberen Endes (134L, 134R) des Dämpfers (35L, 35R) an dem hinteren Rahmen (20L, 20R), der in das Rahmendurchgangsloch (83, 85) und das Halterungsdurchgangsloch (93, 96) eingesetzt wird,
**dadurch gekennzeichnet, dass** der Dämpferbolzen (120L, 120R) an die Halterung (80L, 80R) geschweißt ist, ohne an den hinteren Rahmen (20L, 20R) geschweißt zu sein, und
die Halterung (80L, 80R) einen Halterungskörperteil (90L, 90R) und einen oberen Verlängerungsteil (100L, 100R) aufweist, wobei der Halterungskörperteil (90L, 90R) mit dem hinteren Rahmen (20L, 20R) in Kontakt ist und der obere Verlängerungsteil (100L, 100R) eine fahrzeugmontierte Komponente (44) aufnimmt und sich von dem Halterungskörperteil (90L, 90R) nach oben erstreckt.

2. Rahmenstruktur eines Fahrzeugs nach Anspruch 1, die ferner ein Erleichterungsloch (112 - 114) umfasst, das in dem oberen Verlängerungsteil (100L, 100R) ausgebildet ist.

3. Rahmenstruktur eines Fahrzeugs nach Anspruch 1 oder 2, bei welcher der hintere Rahmen (20L, 20R) eine flache Oberfläche (82, 84) umfasst, die sich in Bezug auf das Fahrzeug nach oben und unten und von vorne nach hinten erstreckt,
wobei das Rahmendurchgangsloch (83, 85) an der flachen Oberfläche (82, 84) bereitgestellt ist und
die Halterung (80L, 80R) an die flache Oberfläche (82, 84) geschweißt ist.

4. Rahmenstruktur eines Fahrzeugs nach Anspruch 3, bei welcher der Halterungskörperteil (90L, 90R) umfasst:
einen äußeren Kontaktierungsteil (91) zum Kontaktieren einer lateral äußeren flachen Oberfläche (82) des hinteren Rahmens (20L, 20R), wobei der äußere Kontaktierungsteil (91) an die äußere flache Oberfläche (82) geschweißt ist,
eine äußere Konvexität (92), die von dem äußeren Kontaktierungsteil (91) auswärts vorragt und das Halterungsdurchgangsloch (93, 96) auf einer Außenseite aufweist,
einen inneren Kontaktierungsteil (94) zum Kontaktieren einer lateral inneren flachen Oberfläche (84) des hinteren Rahmens (20L, 20R), wobei der innere Kontaktierungsteil (94) an die innere flache Oberfläche (84) geschweißt ist, und
einen inneren konvexen Teil (95), der von dem inneren Kontaktierungsteil (94) einwärts vorragt und das Halterungsdurchgangsloch (93, 96) auf einer Innenseite aufweist,
wobei der Dämpferbolzen (120L, 120R) durch den äußeren konvexen Teil (92) und den inneren konvexen Teil (95) gestützt ist.

## Revendications

1. Structure de cadre d'un véhicule, comprenant :
une paire de cadres arrières gauche et droit (20L, 20R) ;
un amortisseur (35L, 35R) fixé à chacun des cadres arrières (20L, 20R) ;
un support (80L, 80R) prévu sur chacun des cadres arrières (20L, 20R) ;
les deux cadres arrières (20L, 20R) ayant un trou traversant de cadre (83, 85) passant dans une direction latérale ;
les deux supports (80L, 80R) ayant un trou traversant de support (93, 96) passant dans la direction latérale et étant soudés aux cadres arrières respectifs (20L, 20R) de telle sorte que les axes des trous traversants de support (93, 96) et les axes des trous traversants de cadre (83, 85) sont alignés ; et
un boulon d'amortisseur (120L, 120R) pour fixer une extrémité supérieure (134L, 134R) de l'amortisseur (35L, 35R) au cadre arrière (20L, 20R) étant inséré dans le trou traversant de cadre (83, 85) et le trou traversant de support (93, 96),
**caractérisé en ce que** le boulon d'amortisseur (120L, 120R) est soudé au support (80L, 80R) sans être soudé au cadre arrière (20L, 20R) ; et
le support (80L, 80R) a une partie de corps de support (90L, 90R) et une partie d'extension supérieure (100L, 100R), la partie de corps de support (90L, 90R) étant en contact avec le cadre arrière (20L, 20R), et la partie d'extension supérieure (100L, 100R) recevant un composant embarqué (44) et s'étendant vers le haut à partir de la partie de corps de support (90L, 90R).

2. Structure de cadre d'un véhicule selon la revendication 1, comprenant en outre un trou d'allègement (112 - 114) formé dans la partie d'extension supérieure (100L, 100R).

3. Structure de cadre d'un véhicule selon la revendication 1 ou 2, dans laquelle le cadre arrière (20L, 20R) comprend une surface plane (82, 84) s'étendant vers le haut et vers le bas et vers l'avant et vers l'arrière par rapport au véhicule,
le trou traversant de cadre (83, 85) étant prévu sur la surface plane (82, 84) ;
et le support (80L, 80R) étant soudé sur la surface plane (82, 84).

4. Structure de cadre d'un véhicule selon la revendication 3, dans laquelle la partie de corps de support (90L, 90R) comprend :
une partie de contact extérieure (91) destinée à être en contact avec une surface plane latéralement extérieure (82) du cadre arrière (20L, 20R), la partie de contact extérieure (91) étant soudée sur la surface plane extérieure (82) ;
une convexité extérieure (92) faisant saillie vers l'extérieur depuis la partie de contact extérieure (91) et ayant le trou traversant de support (93, 96) sur un côté extérieur ;
une partie de contact intérieure (94) destinée à être en contact avec une surface plane latéralement intérieure (84) du cadre arrière (20L, 20R), la partie de contact intérieure (94) étant soudée sur la surface plane intérieure (84) ; et
une partie convexe intérieure (95) faisant saillie vers l'intérieur depuis la partie de contact intérieure (94) et ayant le trou traversant de support (93, 96) sur un côté intérieur,
le boulon d'amortisseur (120L, 120R) étant supporté par la partie convexe extérieure (92) et la partie convexe intérieure (95).
